# EUROPEAN PATENT APPLICATION

(11) **EP 4 394 719 A1**
(43) Date of publication of application: **03.07.2024**
(21) Application number: 22860844.4
(22) Date of filing: 17.03.2022
(51) Int. Cl.: G06T 19/00, G06F 3/04845

(54) **INFORMATION PROCESSING DEVICE**

(30) Priority: 25.08.2021 JP 2021137214
(71) Applicant: Sony Semiconductor Solutions Corporation, Atsugi-shi, Kanagawa 243-0014 (JP); Sony Group Corporation, Tokyo 108-0075 (JP)
(72) Inventor: MATSUMORI, Go, Atsugi-shi, Kanagawa 243-0014 (JP); ENDO, Kenta, Tokyo 108-0075 (JP)
(74) Representative: MFG Patentanwälte Meyer-Wildhagen Meggle-Freund Gerhard PartG mbB
(86) International application number: PCT/JP2022/012443
(87) International publication number: WO 2023/026546

(57) **Abstract**

An information processing apparatus includes: an information acquisition unit that acquires attribute information of a user obtained on the basis of a captured image captured by an imaging device disposed in a real space; and a determination processing unit that determines a presentation mode of XR content to be presented to the user on the basis of the attribute information.

## Description

### TECHNICAL FIELD

The present technology relates to a technical field of an information processing apparatus that presents extended reality (XR) content including a virtual object to a user.

### BACKGROUND ART

By presenting XR content including a virtual object to a user, it is possible to provide various user experiences to the user.

By appropriately displaying the virtual object to be presented to the user, it is possible to enhance the user's immersive feeling in an XR space such as an augmented reality (AR) space, a virtual reality (VR) space, a mixed reality (MR) space, or a substitutional reality (SR) space.

For example, Patent Document 1 below discloses a technique for reducing disturbance of display of a virtual object and preventing confusion of a user.

### CITATION LIST

### PATENT DOCUMENT

Patent Document 1: Japanese Patent Application Laid-Open No. 2012-221250

### SUMMARY OF THE INVENTION

### PROBLEMS TO BE SOLVED BY THE INVENTION

Meanwhile, there is a case where a virtual object is displayed appropriately for a certain user but is not displayed appropriately for another user. Therefore, there is a possibility that immersive feeling in the XR space is weakened depending on the user.

The present technology has been made in view of the circumstances described above, and an object thereof is to present an appropriate virtual object for each user.

### SOLUTIONS TO PROBLEMS

An image processing apparatus according to the present technology includes: an information acquisition unit that acquires attribute information of a user, the attribute information being obtained on the basis of a captured image captured by an imaging device disposed in a real space; and a determination processing unit that determines a presentation mode of XR content to be presented to the user on the basis of the attribute information.

Since the attribute information of the user is acquired on the basis of the captured image, for example, it is not necessary for the user himself/herself to input information.

### BRIEF DESCRIPTION OF DRAWINGS

Fig. 1 is a diagram illustrating a configuration example of an XR providing system.
Fig. 2 is a diagram illustrating an example of XR content.
Fig. 3 is a block diagram illustrating a configuration example of a server device.
Fig. 4 is a block diagram illustrating a configuration example of a user terminal.
Fig. 5 is a block diagram illustrating a configuration example of a camera device.
Fig. 6 is a block diagram of a computer device.
Fig. 7 is an explanatory diagram illustrating an outline of a first embodiment.
Fig. 8 is a diagram illustrating an example of a flow of processing executed by each device in the first embodiment.
Fig. 9 is a diagram illustrating an example of changing a height position of a virtual object according to a body height in a second embodiment.
Fig. 10 is a diagram illustrating an example of a flow of processing executed by each device in the second embodiment.
Fig. 11 is an explanatory diagram illustrating a state where a virtual object is presented to a user in a standing state in a third embodiment.
Fig. 12 is an explanatory diagram illustrating a state where a virtual object is presented to a user in a seated state in the third embodiment.
Fig. 13 is a diagram illustrating an example of a flow of processing executed by each device in the third embodiment.
Fig. 14 is a view illustrating a state where a virtual door is visually recognized in a fourth embodiment.
Fig. 15 is a view illustrating a state where the virtual door is opened and an XR space can be visually recognized in the fourth embodiment.

### MODE FOR CARRYING OUT THE INVENTION

Hereinafter, embodiments according to the present technology will be described in the following order with reference to the accompanying drawings.
<1. System Configuration>
<2. Computer Device>
<3. Processing Flow>
<4. Second Embodiment>
<5. Third Embodiment>
<6. Fourth Embodiment>
<7. Modifications>
<8. Summary>
<9. Present Technology>

### <1. System Configuration>

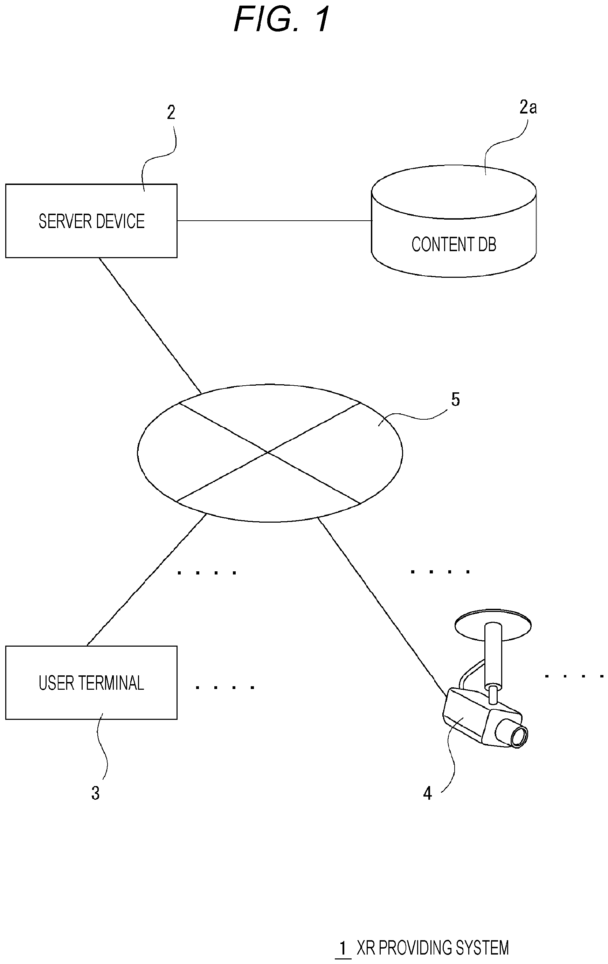

A system configuration of an XR providing system 1 in a first embodiment will be described with reference to Fig. 1.

The XR providing system 1 is a system that performs various types of processing for extended reality (XR) content to a user. The XR content is a generic term for augmented reality (AR) content, virtual reality (VR) content, mixed reality (MR) content, substitutional reality (SR) content, and the like.

The XR content is provided to the user, for example, as an XR space in which a virtual object VOB is arranged.

The XR providing system 1 includes a server device 2, a user terminal 3, and a camera device 4.

The server device 2, the user terminal 3, and the camera device 4 can communicate with each other via a communication network 5.

The server device 2 is a computer device such as a personal computer having arithmetic processing capability.

The server device 2 receives information regarding the user from the user terminal 3 or the camera device 4, and selects or generates a virtual object VOB considered to be appropriate for the user according to the information.

The XR content including the selected or generated virtual object VOB is transmitted to the user terminal 3 via the communication network 5.

The server device 2 manages a content database (DB) 2a in which XR content such as a virtual object VOB is stored.

The server device 2 provides the XR content in which an appropriate virtual object VOB is arranged for each user by generating or selecting the virtual object VOB or changing the information of the virtual object VOB according to the attribute information of the user.

Here, the attribute information of the user may include information such as height, weight, age, gender, body shape, hairstyle, clothes, and preference. Furthermore, the attribute information also includes information such as posture information and a behavior state of the user. The behavior state is information for specifying the user's behavior such as a walking state, a stopping state, a sitting state, a state of observing the surroundings, a state of talking with someone, and a state of operating a smartphone as the user terminal 3.

The content DB 2a stores the shape, color, and material of the virtual object VOB. Furthermore, coordinates and the like at which the virtual object VOB is arranged in the XR space are also stored.

The shape, color, and coordinates of the virtual object VOB can be appropriately modified (corrected) according to the attribute information of the user. Alternatively, different virtual objects VOB may be stored for each piece of attribute information. Specifically, the virtual objects VOB include a virtual object VOB for adults and a virtual object VOB for children, and the like.

The server device 2 selects a virtual object VOB from among a plurality of the virtual objects VOB stored in the content DB 2a according to the attribute information of the user.

The user terminal 3 is a mobile terminal such as a smartphone or a tablet terminal carried by the user. Alternatively, the user terminal 3 may be a smart glass or a VR head mounted display.

The user terminal 3 has a camera function and an image display function. In a case of presenting AR content to the user, an image of the AR content in which a virtual object VOB acquired from the server device 2 is superimposed on a real object such as a wall, a floor, a chair, or a desk imaged by the camera function is presented to the user by the display function.

By visually recognizing the image of the XR space in which the virtual object VOB is arranged, the user can obtain an experience as if the user is present in XR content different from a real space, that is, in the XR space.

The user terminal 3 can extract the attribute information of the user by performing image analysis processing on the image captured by the camera function. The extracted attribute information is transmitted to the server device 2.

Note that the user terminal 3 may not include the image analysis processing function for extracting the attribute information, and may be configured to be able to transmit the captured image data to the server device 2.

In that case, the server device 2 performs the image analysis processing to extract the attribute information of the user.

Alternatively, the information obtained by the image analysis processing may be transmittable as information for specifying the height or the like of the user. For example, the height of the lens portion of the camera of the user terminal 3 is extracted by image analysis and transmitted to the server device 2.

In the server device 2, the height information of the user can be estimated as the attribute information on the basis of the height information of the lens portion.

That is, the information extracted by the user terminal 3 and transmitted to the server device 2 may not be the attribute information itself and may be information for obtaining the attribute information as described above.

The camera device 4 is, for example, an imaging device disposed at a fixed position in a room or a space where the user is present, such as a monitoring camera. Although the position of the camera device 4 is fixed, the angle of view may be changeable.

The camera device 4 extracts the attribute information such as the height, age, gender, posture information, and behavior state of the user by performing image analysis processing on the captured image. Furthermore, information regarding the eye line of the user may be able to be extracted by the image analysis processing. It is possible to specify an object that is a target of interest of the user by the eye line information.

The extracted attribute information of the user is appropriately transmitted to the server device 2.

Note that, similarly to the user terminal 3, the server device 2 may be configured to perform the image analysis processing.

Various configurations of the communication network 5 can be considered. For example, the Internet, an intranet, an extranet, a local area network (LAN), a community antenna television (CATV) communication network, a virtual private network, a telephone line network, a mobile communication network, a satellite communication network, and the like are assumed as the communication network 5.

Furthermore, various examples are also assumed for transmission media constituting the whole or a part of the communication network 5. For example, the present technology can be used in a wired manner such as Institute of Electrical and Electronics Engineers (IEEE) 1394, a universal serial bus (USB), power line conveyance, or a telephone line, or in a wireless manner such as infrared rays such as infrared data association (IrDA), Bluetooth (registered trademark), 802.11 radio, a mobile phone network, a satellite line, or a terrestrial digital network.

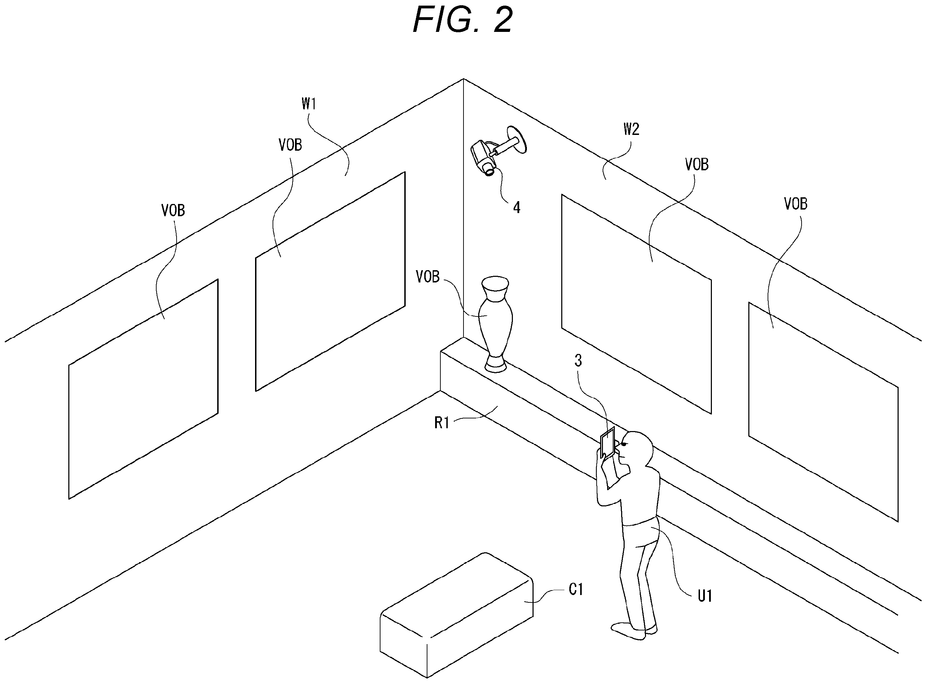

Fig. 2 illustrates an example of an AR space as AR content presented to a user U1.

The user U1 holds a smartphone as the user terminal 3. A chair C1 is placed in the room, and the camera device 4 is installed on a side wall W2. The camera device 4 can image the user U1.

No poster and the like are actually attached to a front wall W1 and the side wall W2 of the user U1. When the user U1 visually recognizes a captured image of the wall via a display unit of the user terminal 3, the user U1 can visually recognize the wall W1 and the wall W2 on which the poster as a virtual object VOB is pasted.

Furthermore, nothing is actually placed on a shelf R1 installed along the wall W2, but in a case where the shelf R1 is visually recognized through the display unit of the user terminal 3, the shelf R1 on which the virtual object VOB as a pot is placed can be visually recognized.

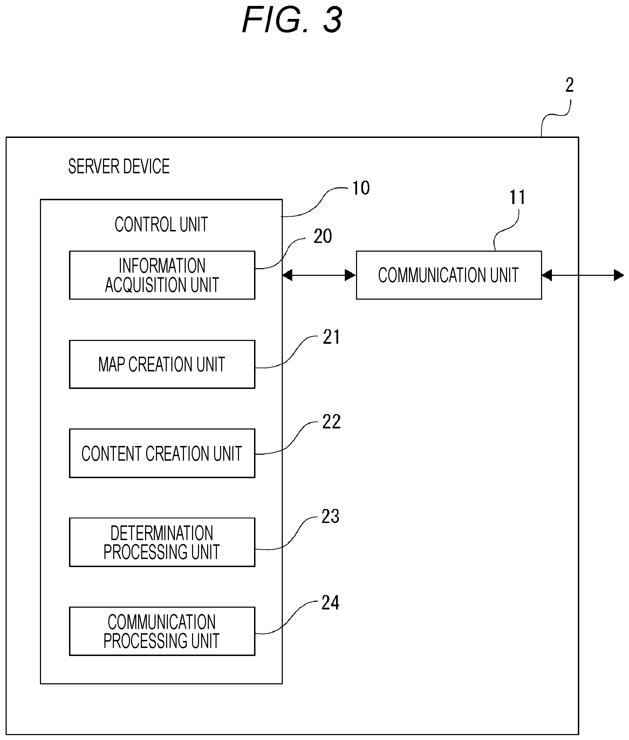

A configuration example of the server device 2 is illustrated in Fig. 3.

The server device 2 includes a control unit 10 and a communication unit 11.

The control unit 10 performs each piece of processing for presenting a virtual object VOB appropriate for the user.

The control unit 10 includes an information acquisition unit 20, a map creation unit 21, a content creation unit 22, a determination processing unit 23, and a communication processing unit 24.

The information acquisition unit 20 acquires attribute information regarding the user from the user terminal 3 having an imaging function or the camera device 4. Furthermore, the information acquisition unit 20 acquires the position information of the user terminal 3. The position information can be obtained by the user terminal 3 receiving a signal from a short-range wireless communication device such as a beacon or a signal based on a global navigation satellite system (GNSS).

Alternatively, the information acquisition unit 20 may extract the position information of the user terminal 3 on the basis of the captured image received from the user terminal 3.

The map creation unit 21 creates a three-dimensional map using captured images obtained by imaging a target space such as a room from various angles by an operator who has a camera for creating the three-dimensional map. Note that the three-dimensional map may be generated or the already generated three-dimensional map may be updated (for example, correction of the three-dimensional map corresponding to the layout change, and the like) on the basis of the captured image captured by the camera device 4 or the user terminal 3.

The created three-dimensional map is stored in the content DB 2a.

The content creation unit 22 generates a virtual object VOB to be arranged on the three-dimensional map. Furthermore, the content creation unit 22 performs processing of arranging the virtual object VOB on the three-dimensional map, that is, processing of determining the coordinates of the virtual object VOB.

The determination processing unit 23 performs processing of determining or changing a presentation mode of the virtual object VOB to be presented to the user on the basis of the acquired attribute information. This determination processing includes processing of changing the presentation position of the virtual object VOB, processing of changing to another virtual object VOB, processing of determining whether or not to present the virtual object VOB, and the like.

For example, the determination processing unit 23 changes the height position of the virtual object VOB in accordance with the height of the user. Alternatively, the determination processing unit 23 changes the type of the virtual object VOB according to the gender of the user. For example, "art" is selected as the type of the virtual object VOB for an adult user, and "toy" is selected as the type of the virtual object VOB for a child user.

With this selection, a pot as an artistic work or a stuffed toy as a toy may be placed on the table according to the attribute information of the user.

Furthermore, the determination processing unit 23 selects a virtual object VOB according to the preference of the user.

For example, a plurality of types of virtual objects VOB may be prepared as presentation candidates, and one virtual object VOB may be selected from those virtual objects VOB according to information of the preference of the user.

Specifically, in a case where information indicating that the user likes dogs is obtained as the information of the preference of the user, a virtual object VOB that is a dog poster is selected, and in a case where information indicating that the user likes cats is obtained, a virtual object VOB that is a cat poster is selected.

Note that the determination processing unit 23 may perform flag processing or the like so as not to present a virtual object VOB that is not preferable for the user.

For example, for a user who is not good at violent expression, "0: non-display" is set to the display flag of a virtual object VOB such as a poster in which violent expressions are used.

The communication processing unit 24 performs processing of receiving the attribute information of the user from the user terminal 3 as the imaging device or the camera device 4. The communication processing unit 24 may receive the attribute information of the user itself from the user terminal 3 or the camera device 4, or may receive a captured image from the user terminal 3 or the camera device 4. In a case where the captured image is received, the determination processing unit 23 of the server device 2 executes processing of extracting the attribute information from the captured image.

Note that the communication processing unit 24 may receive the attribute information of the user from the user terminal 3 or the camera device 4 without including information capable of identifying a specific individual.

Furthermore, the communication processing unit 24 performs processing of acquiring information such as the virtual object VOB from the content DB 2a, and the like.

Moreover, the communication processing unit 24 performs processing of transmitting XR content including the virtual object VOB to the user terminal 3, and the like.

The communication unit 11 communicates with another information processing apparatus according to the processing of the communication processing unit 24.

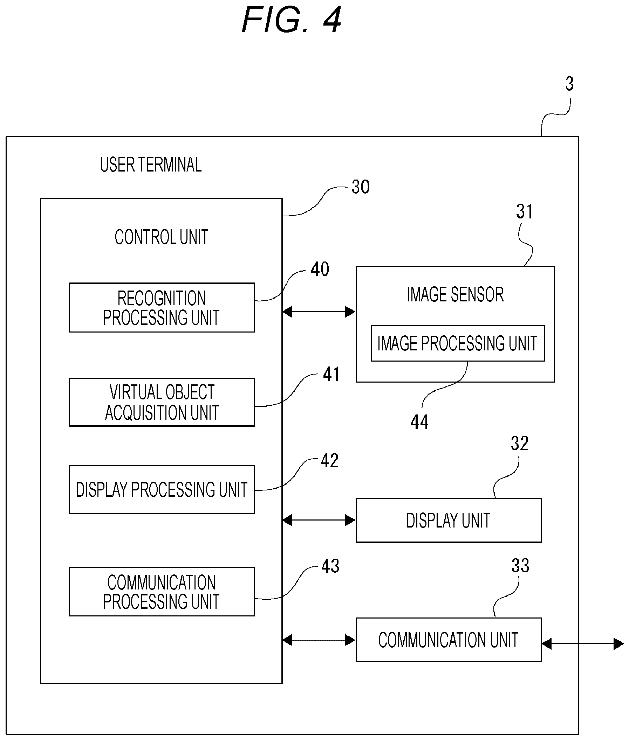

A configuration example of the user terminal 3 is illustrated in Fig. 4.

The user terminal 3 includes a control unit 30, an image sensor 31, a display unit 32, and a communication unit 33.

The control unit 30 performs processing of detecting a user's operation on the user terminal 3, processing of activating an application as a corresponding processing according to the operation, processing of displaying a captured image acquired by the image sensor 31, and the like, for example.

The control unit 30 includes a recognition processing unit 40, a virtual object acquisition unit 41, a display processing unit 42, and a communication processing unit 43.

The recognition processing unit 40 performs image analysis processing on the captured image data, and performs processing of recognizing a real object within the angle of view. Furthermore, the recognition processing unit 40 may be able to specify the shape and the like of the real object on the basis of the distance data.

Moreover, the recognition processing unit 40 may be able to recognize a human by performing processing of determining whether or not the real object is a person or a part of a body.

Note that the processing of detecting the real object may be executed by a processor or the like of the image sensor 31.

The virtual object acquisition unit 41 acquires various virtual objects VOB from the server device 2. In a case of presenting VR content to the user, the virtual object acquisition unit 41 acquires all virtual objects VOB arranged in a VR space. Furthermore, in a case of presenting AR content, the virtual object acquisition unit 41 acquires, from the server device 2, a virtual object VOB or the like to be superimposed on the real object existing in an AR space.

The display processing unit 42 performs processing for displaying a captured image or the like on the display unit 32. The display processing unit 42 performs processing for displaying an image of XR content according to the angle of view of the camera function of the user terminal 3.

Furthermore, in a case of presenting the AR content, the display processing unit 42 performs processing of displaying the AR content by performing processing of superimposing the virtual object VOB acquired from the server device 2 on the real object such as a wall, a chair, or a door detected on the basis of the captured image captured.

The communication processing unit 43 performs processing of receiving the virtual object VOB from the server device 2, and the like.

The image sensor 31 includes a pixel array unit in which pixels are arranged in a matrix, and an image processing unit 44 that performs various types of signal processing such as white balance adjustment, sharpness adjustment, and contrast adjustment on an image signal (RAW data) output from the pixel array unit.

The image processing unit 44 performs image analysis processing on the captured image data, and extracts the attribute information of the user who is the subject.

Note that the recognition processing of the real object by the recognition processing unit 40 may be executed by the image processing unit 44 included in the image sensor 31.

Note that the image sensor 31 may be configured to be able to extract distance information to the subject. Then, the image processing unit 44 may perform the image analysis processing using the distance information.

Note that the image processing unit 44 may recognize the real object and extract attribute information by using an artificial intelligence (AI) model obtained by machine learning.

The display unit 32 is, for example, a display such as a liquid crystal display (LCD) disposed on the front surface of a smartphone. As described above, the display unit 32 displays an image or the like as the AR content in which the virtual object VOB is superimposed on the real object.

The communication unit 33 communicates with another information processing apparatus according to the processing of the communication processing unit 24.

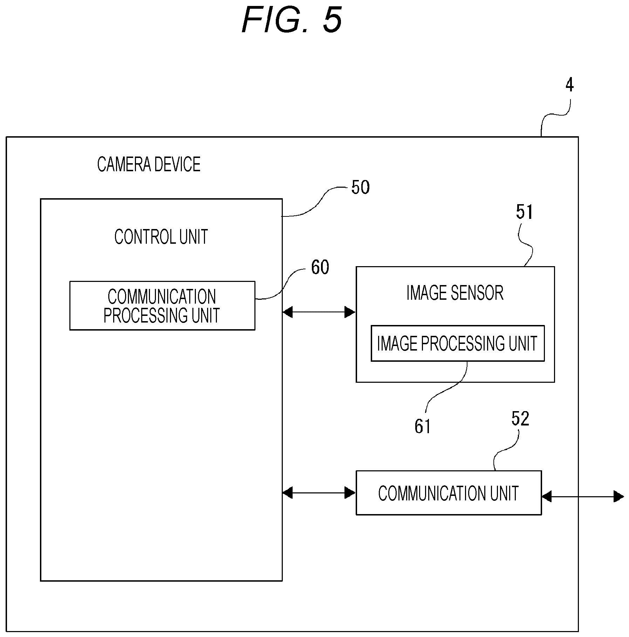

A configuration example of the camera device 4 is illustrated in Fig. 5.

The camera device 4 includes a control unit 50, an image sensor 51, and a communication unit 52.

The control unit 50 controls the entire camera device 4. Specifically, processing of storing a captured image captured by the image sensor 51, processing of transmitting the captured image to another information processing apparatus, and the like are executed.

The control unit 50 includes a communication processing unit 60.

The communication processing unit 60 performs processing of transmitting the captured image to the server device 2 as another Information processing apparatus, processing of transmitting attribute information extracted from the captured image, and the like.

Furthermore, the communication processing unit 60 can transmit information that can uniquely specify the camera device 4, such as an identification (ID) of the camera device 4, to the server device 2.

The image sensor 51 includes a pixel array unit in which pixels are arranged in a matrix, and an image processing unit 61 that performs various types of signal processing such as white balance adjustment, sharpness adjustment, and contrast adjustment on an image signal output from the pixel array unit.

The image processing unit 61 performs image analysis processing on the captured image data, and extracts attribute information such as the height and posture information of the user who is the subject.

Furthermore, the image sensor 51 may be configured to be able to extract distance information to the subject.

Note that the image processing unit 61 may recognize the real object and extract the attribute information of the user by using an artificial intelligence (AI) model obtained by machine learning.

The communication unit 52 communicates with another information processing apparatus according to the processing of the communication processing unit 60.

### <2. Computer Device>

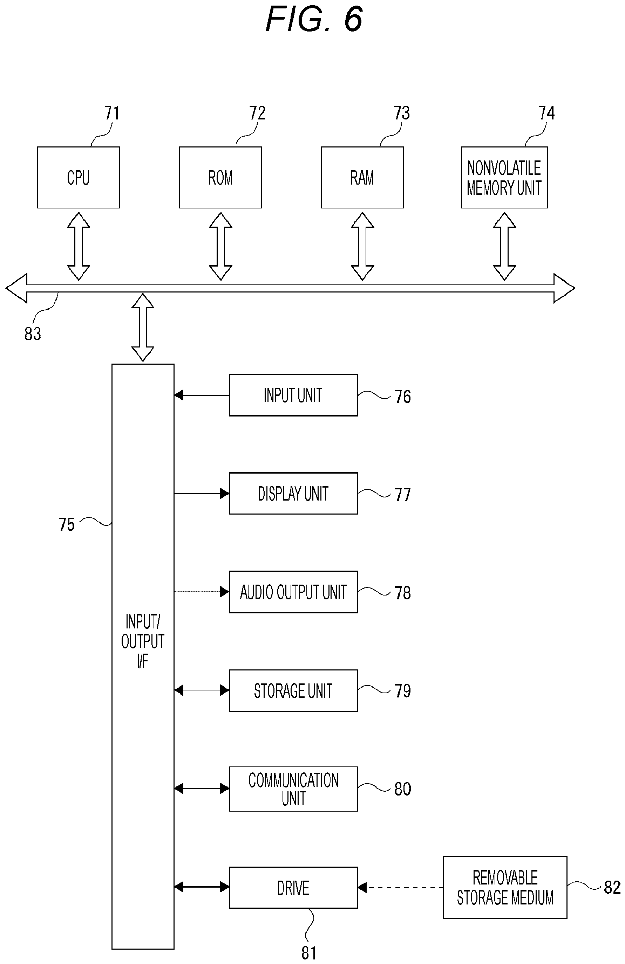

Various types of information processing apparatuses such as the server device 2, the user terminal 3, the camera device 4, and the content DB 2a are computer devices including an arithmetic processing unit. An example of a hardware configuration of the computer device will be described with reference to Fig. 6.

A central processing unit (CPU) 71 of the computer device functions as an arithmetic processing unit that performs the various types of processing described above, and executes various types of processing in accordance with a program stored in a nonvolatile memory unit 74 such as a read only memory (ROM) 72 or, for example, an electrically erasable programmable read only memory (EEP-ROM), or a program loaded from a storage unit 79 to a random access memory (RAM) 73. Furthermore, the RAM 73 also appropriately stores data and the like necessary for the CPU 71 to execute the various types of processing.

The CPU 71, the ROM 72, the RAM 73, and the nonvolatile memory unit 74 are connected to one another via a bus 83. An input/output interface (I/F) 75 is also connected to the bus 83.

An input unit 76 including an operation element and an operation device is connected to the input/output interface 75.

For example, as the input unit 76, various types of operation elements and operation devices such as a keyboard, a mouse, a key, a dial, a touch panel, a touch pad, and a remote controller are assumed.

An operation of the user U is detected by the input unit 76, and a signal corresponding to an input operation is interpreted by the CPU 71.

Furthermore, a display unit 77 including an LCD, an organic electronic luminescent (EL) panel, or the like, and an audio output unit 78 including a speaker or the like are integrally or separately connected to the input/output interface 75.

The display unit 77 is a display unit that performs various displays, and includes, for example, a display device provided in a housing of the computer device, a separate display device connected to the computer device, or the like.

The display unit 77 executes display of an image for various types of image analysis processing, a moving image to be processed, and the like on a display screen on the basis of an instruction from the CPU 71. Furthermore, the display unit 77 displays various types of operation menus, icons, messages, and the like, that is, displays as a graphical user interface (GUI) on the basis of the instruction from the CPU 71.

In some cases, the storage unit 79 including a hard disk, a solid-state memory, or the like, and a communication unit 80 including a modem or the like are connected to the input/output interface 75.

The communication unit 80 performs communication processing via a transmission path such as the Internet, wired/wireless communication with various types of devices, bus communication, and the like.

A drive 81 is also connected to the input/output interface 75 as necessary, and a removable storage medium 82 such as a magnetic disk, an optical disk, a magnetooptical disk, or a semiconductor memory is appropriately mounted.

A data file and the like such as a program used for each piece of processing can be read from the removable storage medium 82 by the drive 81. The read data file is stored in the storage unit 79, and images and audio included in the data file are output by the display unit 77 and the audio output unit 78. Furthermore, a computer program and the like read from the removable storage medium 82 are installed in the storage unit 79 as necessary.

In this computer device, for example, software for processing of the present embodiment can be installed via network communication by the communication unit 80 or the removable storage medium 82. Alternatively, the software may be stored in advance in the ROM 72, the storage unit 79, or the like.

Information processing and communication processing necessary for various types of information processing apparatuses including the above-described arithmetic processing unit are executed by the CPU 71 performing processing operations on the basis of the various programs.

Note that the information processing apparatus is not limited to a single computer device as illustrated in Fig. 6 and may be configured by systematizing a plurality of computer devices. The plurality of computer devices may be systematized by a local area network (LAN) or the like, or may be disposed in a remote place by a virtual private network (VPN) or the like using the Internet or the like. The plurality of computer devices may include a computer device as a server group (cloud) that can be used by a cloud computing service.

### <3. Processing Flow>

A flow of processing executed by the server device 2, the user terminal 3, and the camera device 4 will be described.

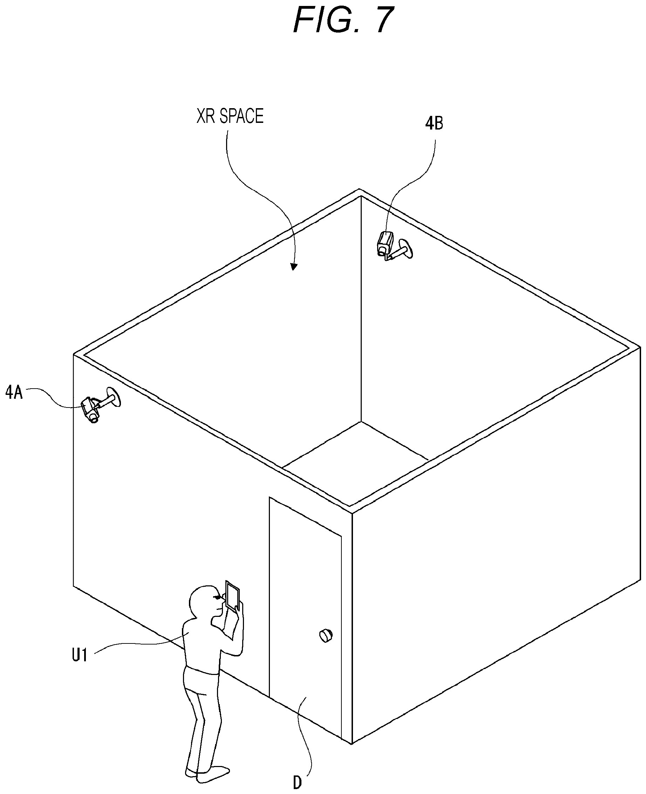

Note that, as illustrated in Fig. 7, when the user U1 opens a door D of the private room, an XR space (VR space, AR space, or the like) corresponding to the attribute information of the user is developed in the private room. As a result, the user U1 can visually recognize the XR content via the display unit 32 of the user terminal 3.

Note that a camera device 4A that acquires the attribute information and the like of the user U1 entering the room is installed near the door D. The server device 2 can transmit the information of the XR content adapted to the user U1 to the user terminal 3 by acquiring the attribute information and the like of the user U1 from the camera device 4A.

Furthermore, the user terminal 3 to which the XR content is to be transmitted can be limited by transmitting the XR content to the user terminal 3 of the user U1 captured by the camera device 4A installed near the door D. With this limitation, it is possible to reduce an increase in communication amount as compared with a case where the XR content is transmitted to a plurality of user terminals 3 without any reason.

Furthermore, a camera device 4B is installed in the private room, and by appropriately acquiring the attribute information of the user U1 from the camera device 4B, the virtual object VOB can be presented according to the state of the user U1 at that time.

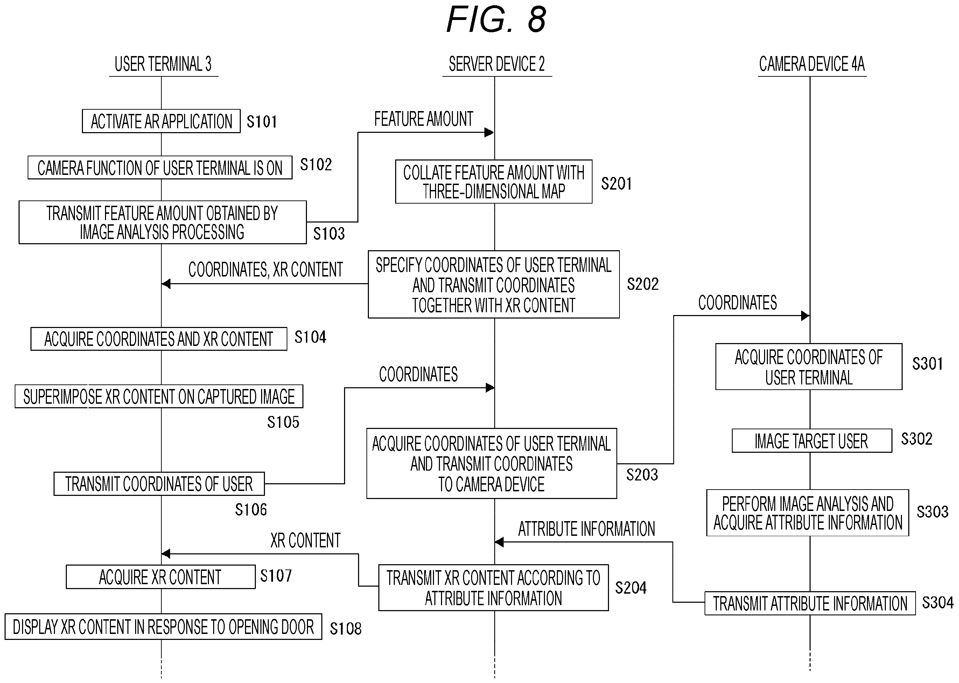

A flow of specific processing will be described with reference to Fig. 8.

In step S101, the user terminal 3 activates an application (hereinafter, referred to as "AR application") for sensing the AR content. This processing is performed, for example, according to an operation of the user U1.

Note that the AR application can present not only AR content but also VR content and the like. That is, the AR application is software for providing XR content.

In step S102, the user terminal 3 starts imaging by activating the camera function. The display unit 32 of the user terminal 3 displays a through image captured by the camera function.

The user terminal 3 transmits the feature amount obtained by the image analysis processing to the server device 2 in step S103. The feature amount includes, for example, point cloud data that is a collection of feature points of a captured scene or a captured object extracted on the basis of a captured image. The feature amount may include distance information, and each feature point may include distance information from the user terminal 3.

The server device 2 acquires the feature amount by receiving the information from the user terminal 3, and collates the feature amount with a three-dimensional map in step S201.

With this collation processing, it is possible to specify the coordinates of the user terminal 3 in the three-dimensional map. In the example of Fig. 7, it can be specified that the user terminal 3 is located in front of the door D.

Note that the communication amount can be reduced by receiving the feature amount extracted from the captured image instead of receiving the captured image from the user terminal 3.

In step S202, the server device 2 specifies the coordinates of the user terminal 3 and transmits the coordinates to the user terminal 3 together with XR content (AR content).

The user terminal 3 acquires the coordinates of the user terminal 3 and the XR content by receiving the information from the server device 2 in step S104, and performs processing of superimposing a virtual object VOB in the XR content on the captured image in step S105.

As a result, the virtual object VOB is superimposed on the door D as a real object and displayed on the display unit 32 of the user terminal 3 carried by the user U1.

Note that, in this example, an example in which the virtual object VOB is superimposed on the door D is described, but the door D' as a virtual object VOB may be arranged at a position where the real object does not exist. That is, it is not essential to superimpose a virtual object VOB on a real object.

Furthermore, in step S202, the user terminal 3 acquires the coordinates together with the XR content from the server device 2, so that when the user terminal 3 moves thereafter, the user terminal 3 can express a new position of the user terminal 3 with the coordinates.

The user terminal 3 can transmit the new coordinates of the user terminal 3 updated according to the movement of the user terminal 3 by periodically executing the processing of step S106. That is, the user terminal 3 may transmit the feature amount of the captured image obtained by periodically executing the processing of step S103 to the server device 2, or may transmit position information obtained by a global navigation satellite system (GNSS) or the like.

In step S203, the server device 2 specifies or acquires the coordinates of the user terminal 3 on the basis of the information received from the user terminal 3, and transmits the coordinates to the camera device 4A.

The camera device 4A acquires the coordinates of the user terminal 3 by receiving information from the server device 2 in step S301, and images the target user, that is, the user U1 in step S302. Alternatively, processing of specifying the user U1 among a plurality of persons included in the captured image is performed.

In step S303, the camera device 4A performs image analysis processing on the captured image and acquires the attribute information of the user U1.

In step S304, the camera device 4A transmits the acquired attribute information to the server device 2.

In step S204, the server device 2 transmits the XR content according to the attribute information of the user U1 to the user terminal 3. In this processing, the virtual object VOB to be presented may be selected from a plurality of virtual objects VOB according to the attribute information, or arrangement coordinates, a display mode, and the like of the virtual object VOB may be changed according to the attribute information.

In step S107, the user terminal 3 acquires the XR content by receiving the information from the server device 2. The XR content is, for example, for an XR space (AR space, VR space, or the like) developed in the room ahead of the door D.

In response to the user opening the door D, the user terminal 3 displays the XR content in step S108.

As a result, the user U1 can visually recognize the XR space via the display unit 32 of the user terminal 3.

Note that the server device 2 may perform image analysis processing for acquiring the attribute information regarding the user U1. Specifically, the server device 2 may receive the captured image from the camera device 4A, specify the user U1 in the captured image on the basis of the coordinates of the user U1, the coordinates being received from the user terminal 3, and extract the attribute information regarding the user U1.

The attribute information of the user U1 can be appropriately extracted by using the coordinates of the user U1 and the captured image.

### <4. Second Embodiment>

In a second embodiment, coordinates of a virtual object VOB presented in the XR space in Fig. 2 are made different according to attribute information.

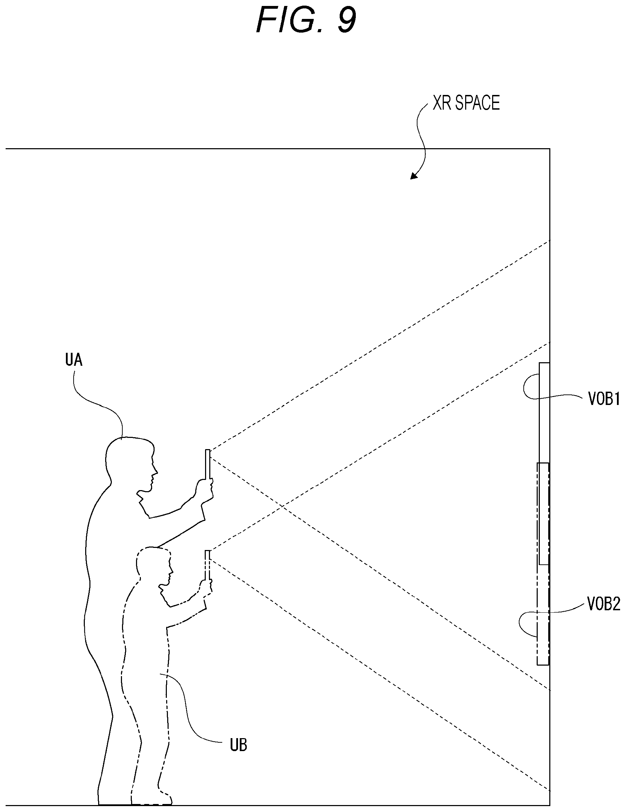

This will be specifically described with reference to Fig. 9.

Fig. 9 is a diagram illustrating the user U1 and the VR space in Fig. 2.

As illustrated, the virtual object VOB is displayed on a wall of the XR space. Here, a case where the user U1 is a user UA who is tall and a case where the user U1 is a user UB who is short are considered.

In a case where the user UA who is tall is the user U1, a virtual object VOB1 is arranged at a high position on the wall.

On the other hand, in a case where the user UB who is short is the user U1, a virtual object VOB2 is arranged at a lower position on the wall.

The height position of the virtual object VOB can be variously considered, and may be, for example, the height of the eye line estimated from the height information of the user U1 or the height of the user terminal 3.

Furthermore, the determined height may be applied to the height of the center of the virtual object VOB, or may be applied to the upper end or the lower end of the virtual object VOB.

In a case where the user U1 is the user UA who is a tall adult, not only the height of the virtual object VOB but also the content may be changed to the virtual object VOB1 so that the content is for adults.

Then, in a case where the user U1 is the user UB who is a short child, the content may be changed to the virtual object VOB2 so that the content is for children.

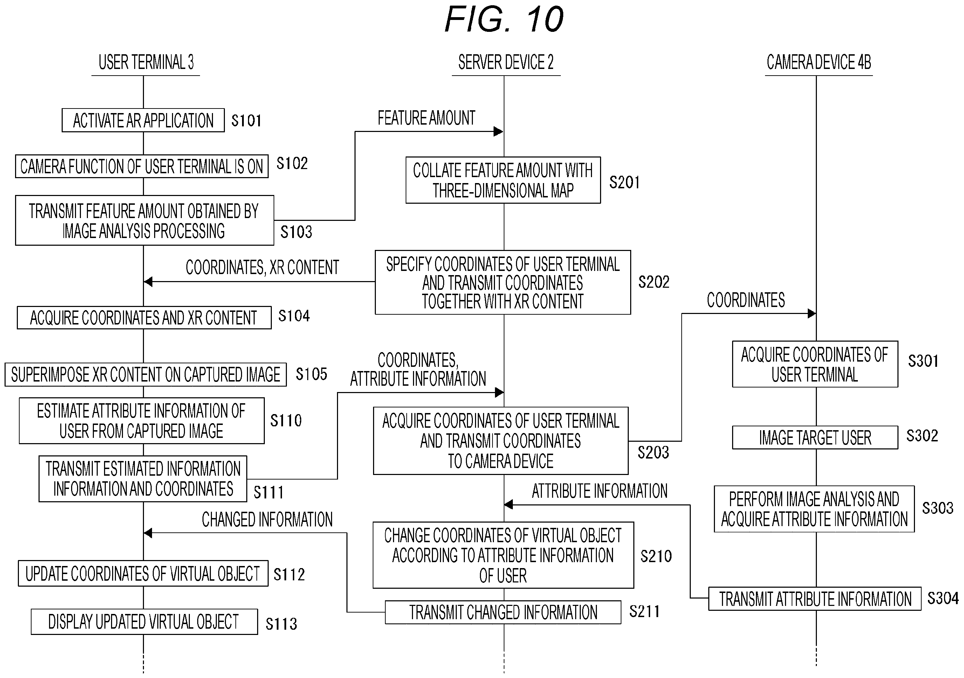

A specific processing flow of each device in the second embodiment will be described with reference to Fig. 10.

Note that processing similar to each piece of processing illustrated in Fig. 8 is denoted by the same step numbers, and description thereof will be omitted as appropriate.

The user terminal 3 activates the AR application in step S101, and starts the camera function of the user terminal 3 in step S102. In step S103, the user terminal 3 transmits the feature amount to the server device 2.

The server device 2 collates the feature amount with the three-dimensional map in step S201, specifies the coordinates of the user terminal 3 in step S202, and transmits the coordinates to the user terminal 3 together with the XR content.

The user terminal 3 receives the coordinates of the user terminal 3 and the XR content from the server device 2 in step S104, and performs processing of superimposing the XR content on the captured image in step S105.

However, in a case where the AR application is continuously activated before the user U1 enters the room from the door D, each piece of processing of steps S101 to S105 and each piece of processing of steps S201 and S202 have already been executed, and thus, it is not necessary to execute the processing again at the timing of entering the room.

In step S110, the user terminal 3 estimates the attribute information of the user U1 from the captured image. For example, the height position of the lens portion of the camera of the user terminal 3 is estimated from the information of the distance to the floor captured in the captured image, and the height of the user U1 holding the user terminal 3 is estimated from the height position.

Note that the processing executed by the user terminal 3 may be limited to information used for estimating the height of the user U1, specifically, estimation of the height of the lens portion of the camera of the user terminal 3.

Furthermore, the user terminal 3 may estimate the attribute information of the user U1 using not only the captured image but also other information. For example, the gender, age, and the like of the user may be further estimated from the voice input from the microphone.

In step S111, the user terminal 3 transmits the estimated attribute information and coordinates (feature amount of the captured image or position information obtained by GNSS or the like). As a result, the server device 2 can grasp the latest position of the user terminal 3.

In step S203, the server device 2 specifies or acquires the coordinates of the user terminal 3, and transmits the coordinates to the camera device 4B. Note that, in a case where there are a large number of the camera devices 4 managed by the server device 2, the coordinates of the user terminal 3 are transmitted, on the basis of the received coordinates of the user terminal 3, only to the camera devices 4 disposed at positions where the user U1 carrying the user terminal 3 can be imaged.

Furthermore, in a case where there is a plurality of the camera devices 4 capable of imaging the user U1, the coordinates of the user terminal 3 may be transmitted to each of the camera devices 4.

The camera device 4B acquires the coordinates of the user terminal 3 in step S301, specifies the user U1 in step S302, and images the user U1.

The camera device 4B performs the image analysis processing in step S303, acquire the attribute information of the user U1, and transmits the attribute information acquired in step S304 to the server device 2.

In step S210, the server device 2 changes the coordinates of the virtual object VOB according to the attribute information of the user U1. With this change, for example, the coordinates of the virtual object VOB are changed such that the center of the virtual object VOB is positioned at the height of the eye line of the user U1 on the basis of the height of the user U1.

Furthermore, the server device 2 may change the type of the virtual object VOB to be presented according to the attribute information of the user U1.

In step S211, the server device 2 transmits the changed information. In this transmission processing, only the difference with respect to the information that has already been transmitted may be transmitted, or all the information regarding the virtual object VOB that has been changed may be transmitted again.

In step S112, the user terminal 3 updates the coordinates of the virtual object VOB on the basis of the received information.

In step S113, the user terminal 3 displays the updated virtual object VOB. With this display, the user U1 can visually recognize the optimized virtual object VOB for the user U1 via the user terminal 3.

By executing the series of processing illustrated in Fig. 10, the virtual object VOB appropriate for the user U1 can be presented to the user U1 using the attribute information acquired from the user terminal 3 and the attribute information acquired from the camera device 4B.

Note that the server device 2 may correct the attribute information received from the user terminal 3 using the information regarding the user U1 received from the camera device 4B. For example, taking the height as an example, the height of the user U1 is estimated by acquiring the height position of the lens portion of the user terminal 3 from the user terminal 3. Then, in a case where posture information of the user U1 is acquired from the camera device 4B and it is grasped that the user U1 takes an upright posture, the estimated height is used as it is. On the other hand, in a case where it is grasped that the user U1 takes a crouching posture, the estimated height of the user U1 may be corrected.

By changing the display mode of the virtual object VOB using the height corrected by the posture information, a more appropriate virtual object VOB can be provided to the user U1.

Only part of a series of processing illustrated in Fig. 10 may be executed. For example, the server device 2 may be configured to acquire the attribute information of the user U1 only from the user terminal 3.

That is, among each piece of processing illustrated in Fig. 10, each piece of processing of steps S203, S301, S302, S303, and S304 may not be executed.

Alternatively, the server device 2 may be configured to acquire the attribute information of the user U1 only from the camera device 4.

That is, the user terminal 3 may transmit the coordinate information of the user U1 to the server device 2 in step 5111 without executing step S110. Furthermore, at this time, the camera device 4B may detect the height of the head and the posture of the user U1 and estimate the height of the user U1 on the basis of both pieces of information.

In the present example, the example in which the position of the virtual object VOB is changed is described, but the type of characters included in the virtual object VOB may be changed.

For example, as a result of performing the image analysis processing on the captured image of the camera device 4B, in a case where it is determined that there is a high possibility that the attribute information of the user U1 is "Japanese", the server device 2 may select Japanese as the characters included in the virtual object VOB. On the other hand, as a result of performing the image analysis processing, in a case where it is determined that there is a high possibility that the attribute information of the user U1 is "other than Japanese", for example, there is a high possibility that the attribute information of the user U1 is "Western", the server device 2 may select English as the characters included in the virtual object VOB.

Furthermore, in Japanese, there are character types (Chinese characters) that are difficult for children to read and character types (hiragana and katakana) that are easy for children to read. Therefore, in a case where the attribute information of the user U1 is "child", a change is made to replace "Chinese characters" in a sentence included in the virtual object VOB with "hiragana". Alternatively, a virtual object VOB including a sentence replaced with "hiragana" is selected.

With this replacement, it is possible to present the virtual object VOB including a sentence that is easy for children to read.

### <5. Third Embodiment>

In a third embodiment, the type of the virtual object VOB presented in the XR space in Fig. 7 are made different according to the attribute information. For example, an appropriate virtual object VOB is presented to the user according to the posture information, the direction of the line-of-sight, and the direction of the face of the user. In the following example, a virtual object VOB as a still image is presented in a state where the user is standing, and a moving image related to the still image is presented as a virtual object VOB in a state where the user is seated.

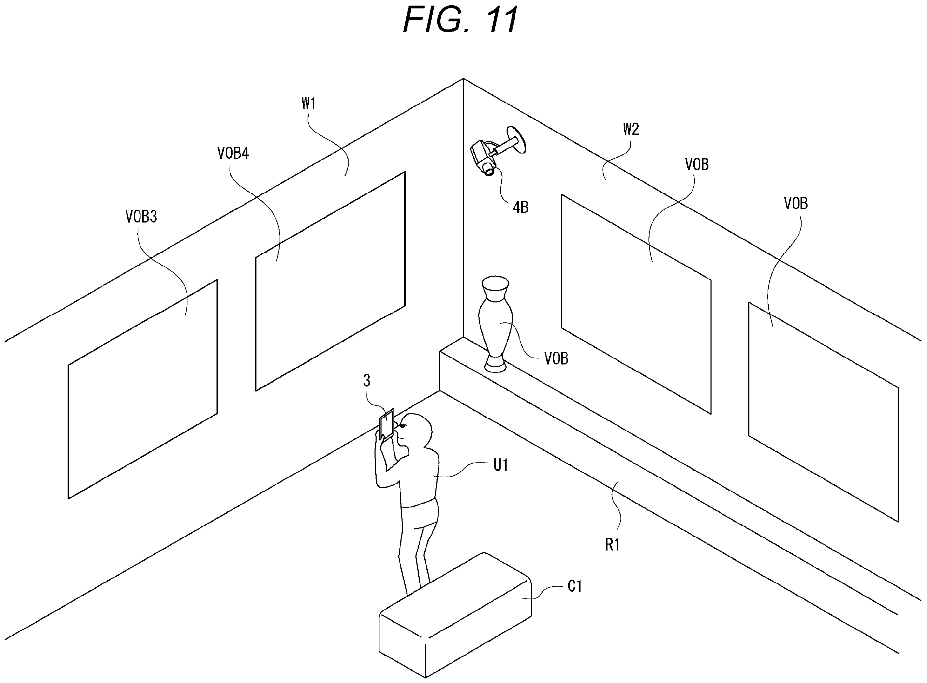

In Fig. 11, the user U1 is in the standing state in front of the chair C1. At this time, virtual objects VOB3 and VOB4 as still images such as posters are presented on a wall W1 in front of the user U1. That is, the user U1 can visually recognize the virtual objects VOB3 and VOB4 via the display unit 32 of the user terminal 3.

Note that the position where the user U1 stands is a position between the virtual object VOB3 and the virtual object VOB4 in a state where the user U1 faces the wall W1. That is, since there is a high possibility that the user U1 in the standing state starts walking, processing of changing the coordinates of the virtual object VOB so as to display the virtual object VOB3 and the virtual object VOB4 in front of the user U1 is not performed.

The height positions of the virtual object VOB3 and the virtual object VOB4 substantially coincide with the height of the eye line of the user U1 in the standing state.

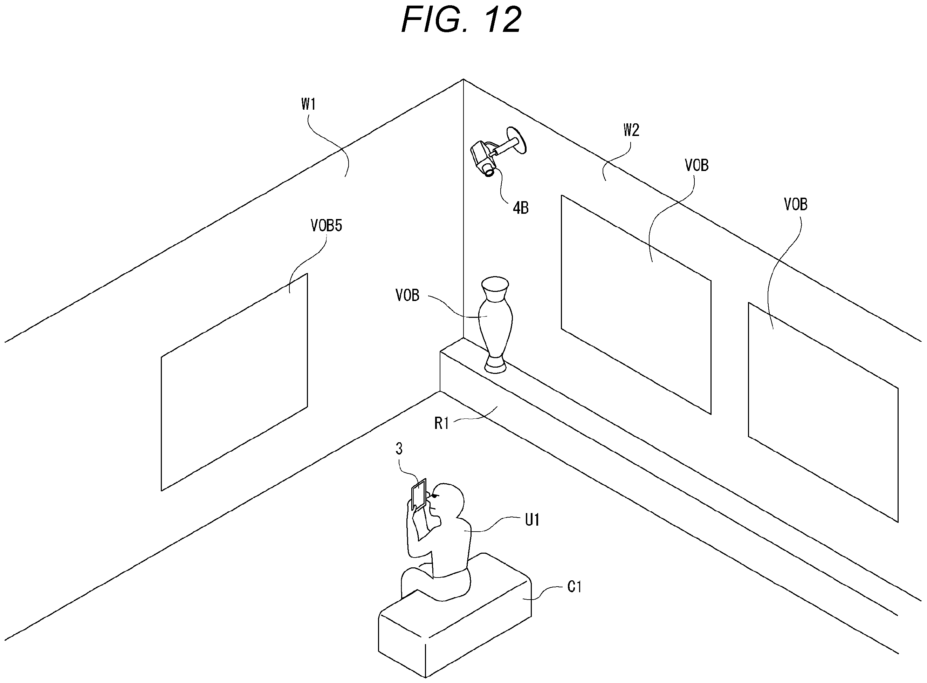

Fig. 12 illustrates that the user changes the posture from the standing state to the seated state. That is, the user U1 is in the seated state on the chair C1. At this time, a virtual object VOB5 is presented on the wall W1 in front of the user U1. The virtual object VOB5 is, for example, an advertisement of a moving image or the like related to the virtual object VOB3 or the virtual object VOB4, which is a still image. Note that, in the selection of the virtual object VOB5, attribute information such as which of the virtual object VOB3 and the virtual object VOB4 the user has directed the line-of-sight toward may be used. As a result, it is possible to present XR content as a moving image related to a still image that is a target of interest of the user.

The position of the virtual object VOB5 is a position right in front of the user U1 on the wall W1. Furthermore, the height position of the virtual object VOB5 substantially coincides with the height of the eye line of the user U1 in the seated state. That is, in a state where the user U1 is seated, there is a low possibility that the user U1 immediately moves, and thus coordinates are set such that the virtual object VOB5 is positioned right in front of the user U1 so that the user U1 is not tired even if the user U1 visually recognizes the virtual object VOB for a long time.

That is, the virtual object VOB5 is positioned between the virtual object VOB3 and the virtual object VOB4 in the left-right direction, and is arranged slightly below the virtual objects VOB3 and VOB4.

By arranging the virtual object VOB at an appropriate position for both the user U1 in the standing state and the user U1 in the seated state, the user U1 can visually recognize the virtual object VOB in a natural posture.

Note that it is not essential to change the display position of the virtual object VOB according to the posture of the user. That is, in response to the seating of the user, the virtual object VOB5 as a moving image may be displayed at the position of the virtual object VOB3, the virtual object VOB5 as a moving image may be displayed at the position of the virtual object VOB4, or the XR content as a moving image may be displayed at both positions.

Note that the virtual object VOB5 may be content that is not related to the virtual object VOB3 or the virtual object VOB4.

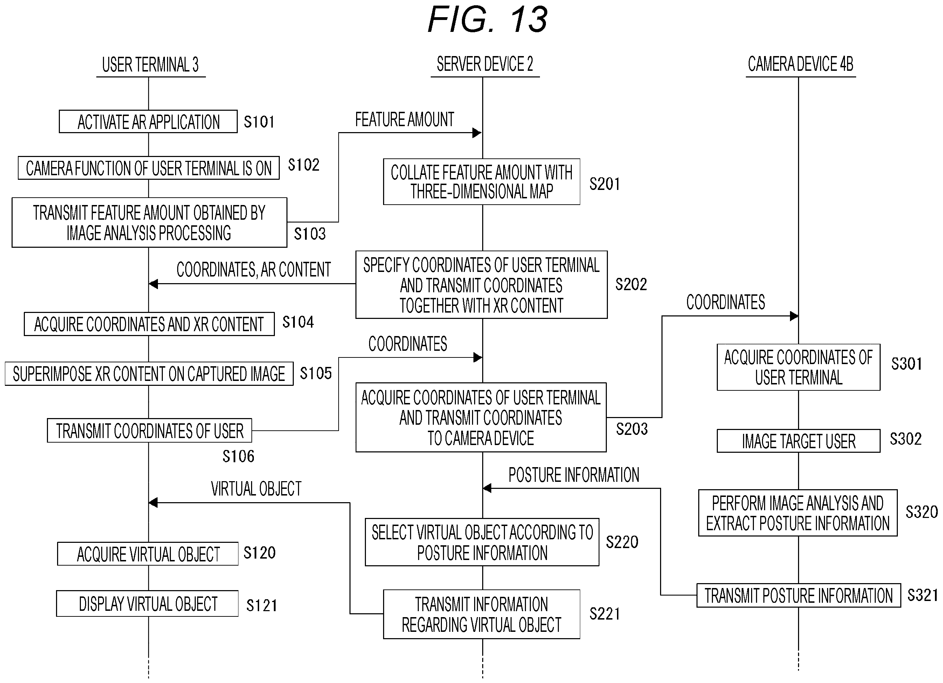

A specific processing flow of each device in the third embodiment will be described with reference to Fig. 13.

Note that processing similar to each piece of processing illustrated in Fig. 8 is denoted by the same step numbers, and description thereof will be omitted as appropriate.

The user terminal 3 activates the AR application in step S101, and starts the camera function of the user terminal 3 in step S102. In step S103, the user terminal 3 transmits the feature amount to the server device 2.

The server device 2 collates the feature amount with the three-dimensional map in step S201, specifies the coordinates of the user terminal 3 in step S202, and transmits the coordinates to the user terminal 3 together with the XR content.

The user terminal 3 receives the coordinates of the user terminal 3 and the XR content from the server device 2 in step S104, and performs processing of superimposing the XR content on the captured image in step S105.

However, in a case where the AR application has been continuously activated before the user U1 enters the room from the door D, the processing up to this point has already been executed, and thus it is not necessary to execute the processing again.

The user terminal 3 executes the processing of step S106 to transmit the coordinates (feature amount of the captured image or position information obtained by GNSS or the like) of the user terminal 3. This processing is periodically executed in the user terminal 3, so that the server device 2 can grasp the latest position information of the user terminal 3.

In step S203, the server device 2 acquires the coordinates of the user terminal 3 by receiving information from the user terminal 3, and transmits the coordinates to the camera device 4B.

The camera device 4B acquires the coordinates of the user terminal 3 in step S301, specifies the user U1 in step S302, and images the user U1.

In step S320, the camera device 4B performs image analysis processing on the captured image and acquires posture information as the attribute information of the user U1.

In step S321, the camera device 4B transmits the acquired posture information to the server device 2.

In step S220, the server device 2 determines the virtual object VOB to be presented to the user U1 according to the posture information of the user U1. As a result, the virtual objects VOB3 and VOB4 as still images are selected as the virtual objects VOB to be presented to the user U1 in the standing state. Furthermore, the virtual object VOB5 as a moving image is selected as the virtual object VOB to be presented to the user U1 in the seated state.

That is, the server device 2 determines the type of the virtual object VOB to be presented according to the posture information of the user U1.

Furthermore, the coordinates of the virtual object VOB may also be changed according to the posture information of the user U1.

In step S221, the server device 2 transmits information of the selected and changed virtual object VOB to the user terminal 3.

The user terminal 3 acquires the virtual object VOB in step S120, and displays the virtual object VOB in step S121.

As a result, the virtual objects VOB3 and VOB4 are presented to the user U1 in the standing state, and the virtual object VOB5 is presented to the user U1 in the seated state.

The user U1 in the standing state may start walking. Therefore, even if the coordinates are adjusted so that the virtual object VOB3 and the virtual object VOB4 are positioned right in front of the user U1, the coordinates of the virtual object VOB are not changed or the like because there is a high possibility that the adjustment becomes wasted.

However, since there is a high possibility that the position of the user U1 in the seated state does not move for a while, the presentation of the virtual object VOB is performed after the coordinates are adjusted so that the virtual object VOB is positioned at a position that is easy for the user U1 to see.

As a result, the user U1 does not need to see the virtual object VOB5 in an unreasonable posture for a long time, and an increase in the burden on the user U1 can be reduced.

### <6. Fourth Embodiment>

In a fourth embodiment, the door D serving as a trigger for presenting the XR space is used as a virtual object.

This will be specifically described with reference to the accompanying drawings.

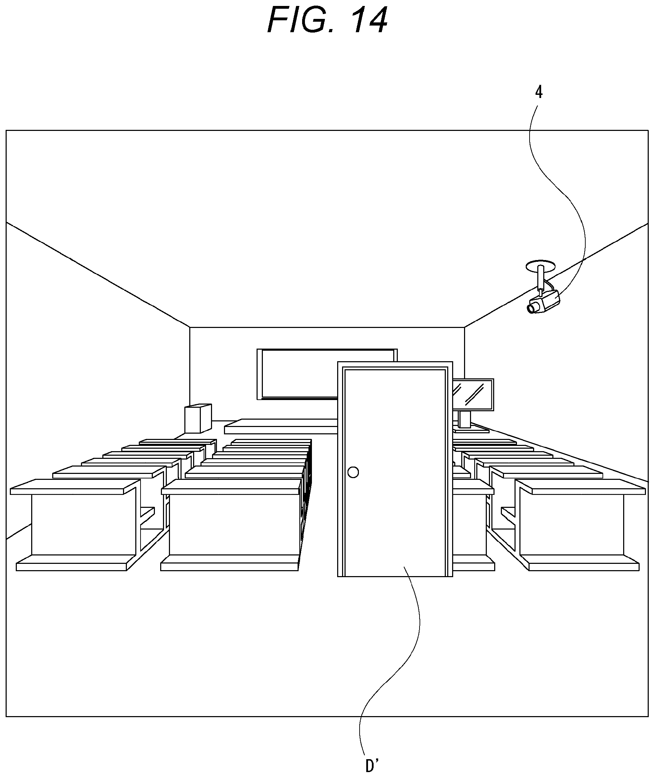

Fig. 14 illustrates a door D' as a virtual object arranged in a real space. An animation is presented to the user so that the door D' opens at a predetermined timing.

Since the flow of specific processing is similar to that in Fig. 8, detailed description thereof is omitted here.

The predetermined timing is determined on the basis of the coordinates of the user terminal 3 in the three-dimensional map specified or acquired on the basis of the coordinates (the feature amount of the captured image or the position information obtained by GNSS or the like) transmitted from the user terminal 3 in step S106 in Fig. 8.

The predetermined timing may be a timing at which an operation or a gesture performed by the user to open the door D' is detected, a timing at which the user approaches the door D' within a predetermined distance, or a timing at which the user directs the line-of-sight toward the door D'.

These timings may be specified by the camera device 4 disposed in the real space. The camera device 4 is attached, for example, at a position where a user approaching the door D' can be imaged. In the example illustrated in Fig. 14, the camera device 4 is disposed on the ceiling located above the door D '.

In the example illustrated in Fig. 14, the user does not sufficiently approach the door D', and the user can visually recognize the door D' in a closed state.

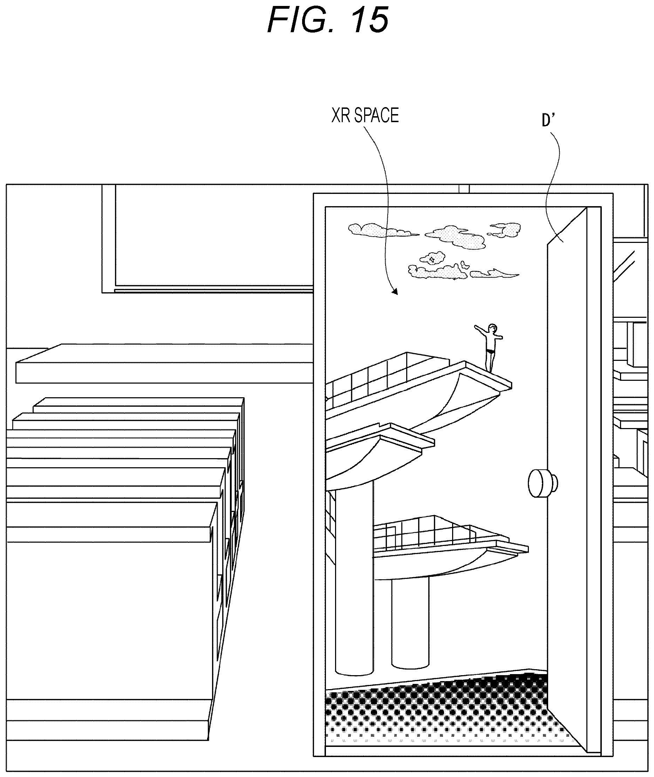

Fig. 15 illustrates a state where the user approaches the door D'.

As illustrated in the drawing, when the user approaches the door D', the user can visually recognize the door D' in an opened state via the user terminal 3. The XR space different from the real space can be visually recognized from the opening of the door D'. Furthermore, in a state where the user has completely passed through the door D', the user can experience a VR space developed around the user.

Note that the user terminal 3 may be used to detect a user's operation or gesture.

Furthermore, another XR space may be developed in the XR space by opening the virtual door D' arranged in the XR space.

### <7. Modifications>

In each of the above-described examples, an example in which the XR providing system 1 includes the server device 2, the user terminal 3, and the camera device 4 is described. However, the XR providing system 1 may include only the server device 2 and the user terminal 3 by having a function as the camera device 4 in the user terminal 3.

For example, as described above, in a case where the height information is obtained as the attribute information regarding the user, for example, the height information may be obtained by estimating the height position of the lens portion on the basis of the captured image captured by the camera function of the user terminal 3.

### <8. Summary>

As described above, the server device 2 as the information processing apparatus includes the information acquisition unit 20 that acquires the attribute information of the user obtained on the basis of the captured image captured by the imaging device (the camera device 4, 4A, 4B or the user terminal 3 having the camera function) disposed in the real space, and the determination processing unit 23 that determines the presentation mode of the XR content to be presented to the user on the basis of the attribute information.

Since the attribute information of the user is based on the captured image, for example, the user does not need to input his/her own information.

Therefore, the user's operation burden and the like can be omitted. Furthermore, by making the presentation mode of the XR content different on the basis of the attribute information, it is possible to present appropriate XR content for each user on the basis of the attribute information. Therefore, it is possible to further enhance immersive feeling in the XR content, and it is also possible to provide appropriate XR content according to the preference of the user.

As described with reference to Figs. 4, 5, and the like, the attribute information of the user may be information obtained by performing image analysis processing on the captured image.

By performing the image analysis processing on the captured image, it is possible to obtain attribute information such as the gender, age, and height of the user. Furthermore, by obtaining information such as the eye line of the user by the image analysis processing, it is possible to specify a target object or the like in which the user is interested. As a result, information such as the preference of the user can be obtained as the attribute information.

As described with reference to Fig. 2 and the like, the imaging device (the camera device 4, 4A, 4B or the user terminal 3 having the camera function) may be a mobile terminal (the user terminal 3) carried by the user. That is, the server device 2 may obtain the attribute information of the user on the basis of the captured image captured using the camera function of the mobile terminal as the user terminal 3.

By analyzing the captured image captured by the mobile terminal such as a smartphone carried by the user, the height position or the like of the mobile terminal can be specified. As a result, the height and the like of the user can be estimated. Furthermore, it is possible to specify a subject in which the user images with interest. That is, it is easy to specify the target object in which the user is interested from the subject captured within the angle of view without analyzing the line-of-sight, the direction of the face, and the like of the user.

As described with reference to Fig. 2 and the like, the imaging device (the camera device 4, 4A, 4B or the user terminal 3 having the camera function) may be a fixed imaging device disposed at a fixed position in the real space.

The imaging device is disposed at a fixed position in a certain space, such as a monitoring camera, for example. As a result, it is not necessary to receive the information for obtaining the attribute information, for example, the data of the captured image, the attribute information as the analysis result, and the like from the user terminal 3 such as a smartphone. That is, it is possible to avoid an increase in the processing load of the user terminal 3 and use of the communication amount.

As described above, the attribute information of the user may include the height information of the user.

By obtaining the height information of the user, it is possible to arrange the virtual object VOB at an optimum height for the user, for example. That is, it is possible to prevent the appearance of the virtual object VOB from changing depending on the height position of the eye line of the user, and it is possible to prevent the impression given to the user and the visibility from changing. Furthermore, by arranging the virtual object VOB at an appropriate position, it is possible to prevent the user from overlooking the virtual object VOB.

As described above, the attribute information of the user may include information regarding the preference of the user.

By obtaining the preference information of the user, the XR content to be presented to the user can be changed for each user on the basis of the preference information. That is, by presenting different XR content to a plurality of the users at the same place, it is possible to give satisfaction to all the users.

As described with reference to Fig. 10 and the like, the determination processing unit 23 of the server device 2 may determine the height position of the virtual object VOB included in the XR content.

For example, the height information can be acquired as the attribute information of the user, and the height position of the virtual object VOB can be determined according to the height information. As a result, since the virtual object VOB can be arranged at a position that is easy for the user to see, it is possible to present the XR content that is easy to see and highly satisfactory for the user.

Furthermore, although the height information of the user can be estimated by a simultaneous localization and mapping (SLAM) technology, the estimation on the basis of the captured image is more accurate. Therefore, it is possible to arrange the virtual object at a more appropriate position.

As described with reference to Figs. 10 to 13 and the like, the determination processing unit 23 of the server device 2 may determine the type of the virtual object VOB included in the XR content.

That is, it is possible to make the virtual objects VOB presented to the user completely different. Therefore, as an example of the XR content, for example, in a case where VR content is presented to the user, it is possible to provide a space having a completely different view of the world. In particular, by providing a space matching the preference of the user, it is possible to give high satisfaction to each user.

As described above, the determination processing unit 23 of the server device 2 may select the virtual object VOB to be presented to the user from a plurality of the virtual objects VOB.

For example, a plurality of types of the virtual objects VOB may be prepared in advance, and the virtual object VOB to be presented may be selected according to the attribute information of the user. With this configuration, XR content different for each user can be presented with simple processing.

As described above, the determination processing unit 23 of the server device 2 may change the type of the virtual object VOB by changing the character type.

For example, in the case of Japanese, there are different character types such as Chinese characters, katakana, and hiragana, and Chinese characters and the like are characters that are difficult for children to read. Therefore, in a case where the age information of the user can be obtained as the attribute information, the virtual object VOB or the like can be presented so as to include character information suitable for the user. Furthermore, in a case where a language that can be understood by the user can be specified by specifying the race or the like of the user, the virtual object VOB3 and the virtual object VOB4 can be presented so as to include a language readable by the user. As a result, it is possible to further enhance the user's immersive feeling in the XR content and the degree of understanding of the XR content.

As described with reference to Fig. 3 and the like, the server device 2 may include a reception processing unit (the communication processing unit 24) that receives the captured image from the imaging device (the camera device 4, 4A, 4B or the user terminal 3 having the camera function), and the information acquisition unit 20 may acquire attribute information by performing image analysis processing on the received captured image.

As a result, it is not necessary to execute the image analysis processing on the captured image in the imaging device. Therefore, it is possible to adopt an imaging device having a low processing capability as the imaging device that images the user.

As described with reference to Fig. 3 and the like, the information acquisition unit 20 of the server device 2 may acquire, from the imaging device, the attribute information obtained by the imaging device (the camera device 4, 4A, 4B or the user terminal 3 having the camera function) on the basis of the captured image.

As a result, it is not necessary to receive the data of the captured image from the imaging device. Therefore, it is not necessary to transmit and receive personal information included in the captured image, which is preferable from the viewpoint of protection of privacy. Furthermore, since the attribute information having a smaller data capacity than the captured image is transmitted and received, the amount of data communication can be reduced.

As described with reference to Figs. 11 to 13 and the like, the determination processing unit 23 of the server device 2 may determine the presentation mode on the basis of the attribute information and the posture information of the user.

By changing the presentation mode of the XR content on the basis of not only the attribute information but also the posture information of the user, the XR content can be presented in a mode more preferable for the user.

As described with reference to Fig. 3 and the like, the attribute information acquired by the server device 2 from the imaging device (the camera device 4, 4A, 4B or the user terminal 3 having the camera function) may not include information that can identify a specific individual.

By configuring so that personal information and the like are not transmitted, it is possible to protect privacy of a subject. Furthermore, secondary use of data is also facilitated.

As described with reference to Figs. 9, 10, and the like, the determination processing unit 23 of the server device 2 may determine the presentation mode according to the height information of the user estimated on the basis of the posture information.

For example, even if the height of a mobile terminal is estimated on the basis of an image captured by the mobile terminal such as a smartphone carried by the user, or even if the height of the user is estimated on the basis of an image captured by an imaging device such as a monitoring camera that is disposed at a fixed position and arranged in a space, there is a case where the height of the user cannot be accurately grasped in a situation where the user is crouching. In such a case, more accurate attribute information can be obtained by acquiring the posture information of the user and estimating the height in consideration of the posture information. Therefore, more appropriate XR content can be presented to the user.

As described with reference to Figs. 11 to 13 and the like, the determination processing unit 23 of the server device 2 may determine the type of the virtual object included in the XR content on the basis of the posture information.

As a result, for example, in a case where there is a virtual object VOB appropriate to be presented to the user who is sitting or a virtual object VOB appropriate to be presented to the user who is walking, it is possible to select a preferable virtual object VOB according to the posture information of the user. Therefore, it is possible to provide an appropriate view of the world according to the user's situation, for example.

Specifically, since it is conceivable that there is a possibility that the user who is walking does not show an interest in the virtual object VOB being presented, the type and content of the virtual object VOB to be presented are continuously changed every several seconds or the like. On the other hand, since it is conceivable that there is a possibility that the user who is stopped shows an interest in the virtual object VOB being presented, the type and content of the presented virtual object VOB are not changed. Then, in a case where the type and content of the virtual object VOB are changed, a virtual object VOB similar to the presented virtual object VOB is selected.

With this selection, it is possible to present appropriate XR content according to the user's interest.

As described with reference to Fig. 8 and the like, the information acquisition unit 20 of the server device 2 may acquire the attribute information on the basis of the captured image and the position information of the user.

As a result, even if a plurality of persons is captured in the captured image, the user to be processed can be specified.

Therefore, the attribute information regarding the user to be processed can be appropriately acquired.

The program executed by the information processing apparatus (the server device 2) described above causes the arithmetic processing device to execute each piece of processing of steps S201 to S204 of Fig. 8, each piece of processing of steps S201 to S211 illustrated in Fig. 10, and each piece of processing of steps S201 to S221 illustrated in Fig. 13, and can be recorded in advance in a hard disk drive (HDD) as a recording medium built in a device such as a computer device, a ROM in a microcomputer having a CPU, or the like. Alternatively, the program can be temporarily or permanently stored (recorded) in a removable recording medium such as a flexible disk, a compact disk read only memory (CD-ROM), a magneto optical (MO) disk, a digital versatile disc (DVD), a Blu-ray disc (registered trademark), a magnetic disk, a semiconductor memory, or a memory card. Such a removable recording medium can be provided as what is called package software.

Furthermore, such a program can be installed from the removable recording medium into a personal computer or the like, or can be downloaded from a download site via a network such as a LAN or the Internet.

Note that the effects described herein are merely examples and not limiting, and there may be other effects.

Furthermore, each example described above may be combined in any way, and the above-described various functions and effects may be obtained even in a case where various combinations are used.

### <9. Present Technology>

The present technology can also adopt the following configurations.

An information processing apparatus including:
an information acquisition unit that acquires attribute information of a user, the attribute information being obtained on the basis of a captured image captured by an imaging device disposed in a real space; and
a determination processing unit that determines a presentation mode of XR content to be presented to the user on the basis of the attribute information.

(2) The information processing apparatus according to (1), in which
the attribute information is information obtained by performing image analysis processing on the captured image.

(3) The information processing apparatus according to any one of (1) to (2), in which
the imaging device is a mobile terminal carried by the user.

(4) The information processing apparatus according to any one of (1) to (2), in which
the imaging device is a fixed imaging device disposed at a fixed position in the real space.

(5) The information processing apparatus according to any one of (1) to (4), in which
the attribute information includes height information of the user.

(6) The information processing apparatus according to any one of (1) to (5), in which
the attribute information includes information regarding preference of the user.

(7) The information processing apparatus according to (5), in which
the determination processing unit determines a height position of a virtual object included in the XR content.

(8) The information processing apparatus according to any one of (1) to (6), in which
the determination processing unit determines a type of a virtual object included in the XR content.

(9) The information processing apparatus according to (8), in which
the determination processing unit selects a virtual object to be presented to the user from a plurality of the virtual objects.

(10) The information processing apparatus according to (8), in which
the determination processing unit changes a type of the virtual object by changing a character type.

(11) The information processing apparatus according to any one of (1) to (10), further including
a reception processing unit that receives the captured image from the imaging device, in which
the information acquisition unit acquires the attribute information by performing image analysis processing on the captured image.

(12) The information processing apparatus according to (11), in which
the information acquisition unit acquires, from the imaging device, the attribute information obtained by the imaging device on the basis of the captured image.

(13) The information processing apparatus according to (12), in which
the attribute information acquired from the imaging device does not include information capable of identifying a specific individual.

(14) The information processing apparatus according to any one of (1) to (13), in which
the determination processing unit performs the determination on the basis of the attribute information and posture information of the user.

(15) The information processing apparatus according to (14), in which
the determination processing unit performs the determination according to height information of the user, the height information being estimated on the basis of the posture information.

(16) The information processing apparatus according to (14), in which
the determination processing unit determines a type of a virtual object included in the XR content on the basis of the posture information.

(17) The information processing apparatus according to any one of (1) to (16), in which
the information acquisition unit acquires the attribute information on the basis of the captured image and position information of the user.

### REFERENCE SIGNS LIST

- 1: XR providing system
- 2: Server device
- 3: User terminal (imaging device)
- 4, 4A, 4B: Camera device (imaging device)
- 20: Information acquisition unit
- 23: Determination processing unit
- 24: Communication processing unit (reception processing unit)
- U1, UA, UB: User
- VOB, VOB1, VOB2, VOB3, VOB4, VOB5: Virtual object

## Claims

1. An information processing apparatus comprising:
an information acquisition unit that acquires attribute information of a user, the attribute information being obtained on a basis of a captured image captured by an imaging device disposed in a real space; and
a determination processing unit that determines a presentation mode of XR content to be presented to the user on a basis of the attribute information.

2. The information processing apparatus according to claim 1, wherein
the attribute information is information obtained by performing image analysis processing on the captured image.

3. The information processing apparatus according to claim 1, wherein
the imaging device is a mobile terminal carried by the user.

4. The information processing apparatus according to claim 1, wherein
the imaging device is a fixed imaging device disposed at a fixed position in the real space.

5. The information processing apparatus according to claim 1, wherein
the attribute information includes height information of the user.

6. The information processing apparatus according to claim 1, wherein
the attribute information includes information regarding preference of the user.

7. The information processing apparatus according to claim 5, wherein
the determination processing unit determines a height position of a virtual object included in the XR content.

8. The information processing apparatus according to claim 1, wherein
the determination processing unit determines a type of a virtual object included in the XR content.

9. The information processing apparatus according to claim 8, wherein
the determination processing unit selects a virtual object to be presented to the user from a plurality of the virtual objects.

10. The information processing apparatus according to claim 8, wherein
the determination processing unit changes a type of the virtual object by changing a character type.

11. The information processing apparatus according to claim 1, further comprising
a reception processing unit that receives the captured image from the imaging device, wherein
the information acquisition unit acquires the attribute information by performing image analysis processing on the captured image.

12. The information processing apparatus according to claim 11, wherein
the information acquisition unit acquires, from the imaging device, the attribute information obtained by the imaging device on a basis of the captured image.

13. The information processing apparatus according to claim 12, wherein
the attribute information acquired from the imaging device does not include information capable of identifying a specific individual.

14. The information processing apparatus according to claim 1, wherein
the determination processing unit performs the determination on a basis of the attribute information and posture information of the user.

15. The information processing apparatus according to claim 14, wherein
the determination processing unit performs the determination according to height information of the user, the height information being estimated on a basis of the posture information.

16. The information processing apparatus according to claim 14, wherein
the determination processing unit determines a type of a virtual object included in the XR content on a basis of the posture information.

17. The information processing apparatus according to claim 1, wherein
the information acquisition unit acquires the attribute information on a basis of the captured image and position information of the user.
